# EUROPÄISCHE PATENTSCHRIFT

(11) **EP 0 499 089 B1**
(45) Veröffentlichungstag und Bekanntmachung des Hinweises auf die Patenterteilung: **21.06.1995**
(21) Anmeldenummer: 92101410.6
(22) Anmeldetag: 29.01.1992
(51) Int. Cl.: H02G 3/04

(54) **Flexibler Schutzschlauch für langgestrecktes Gut**
Flexible protection hose for oblong objects
Tuyau flexible de protection pour objets allongés

(30) Priorität: 14.02.1991 DE 4104412; 22.05.1991 DE 4116591
(43) Veröffentlichungstag der Anmeldung: 19.08.1992
(73) Patentinhaber: EILENTROPP KG, D-51676 Wipperfürth (DE)
(72) Erfinder: Eilentropp, Heinz, W-5272 Wipperfürth (DE)

(56) Entgegenhaltungen:
- DE-A- 3 743 145
- US-A- 4 039 006
- US-A- 4 452 279
- AUSZ GE AUS DEN GEBRAUCHSMUSTERN, Heft 24, 9. Jahrgang, 8. Juni 1972, WilaVerlag, MUnchen

## Beschreibung

Die vorliegende Erfindung betrifft einen flexiblen Schutzschlauch für langgestrecktes Gut, wie elektrische Leitungen, Rohrleitungen, Rohrbündel und dergl., aus isolierenden Fäden oder Strängen.

Schutzschläuche der gattungsgemäßen Art sind bekannt, sie dienen dazu, in bestimmten Räumen oder an Stellen, wo mit äußeren mechanischen Beanspruchungen zu rechnen ist, die elektrische Leitung gegen äußere mechanische Einflüsse zu schützen. Das gilt beispielsweise für den Kraftfahrzeugbau, wo im Motorraum befindliche Verbindungsleitungen mechanisch, aber auch temperaturmäßig zu schützen sind bzw. überall dort, wo im Maschinenbau elektrische Leitungen, aber auch mit Hydraulikflüssigkeiten gefüllte Röhrchen oder Rohrbündel, die zu Steuer- oder Antriebszwecken verwendet werden, durch trennende Wände hindurchgeführt werden müssen.

Schutz beanspruchen aber auch Verbindungsstellen elektrischer Leitungen oder Rohrleitungen und dergl., da diese nach dem Durchverbinden der elektrischen Leiter oder der Rohranschlüsse im allgemeinen gegen äußere mechanische Einflüsse besonders empfindlich sind.

Eine bekannte Ausführungsform (EP-PS 0 048 176) sieht einen mehrschichtigen Schutzschlauch vor, der aus einer äußeren gewellten flexiblen Hülle, einer inneren Abschirmung sowie einer Haltevorrichtung besteht, die die Abschirmung gegen die äußere Hülle drückt und aus gewobenen oder geflochtenen Fäden besteht. Dieses Geflecht soll axial zusammendrückbar und radial expandierbar sein. Nachteilig bei dieser bekannten Konstruktion ist der aufwendige Aufbau des Schutzschlauches, der dessen Flexibilität wesentlich einschränkt, aber auch die Tatsache, daß jede Schicht eine Vergrößerung des Außendurchmessers bedeutet, so daß der bekannte Schutzschlauch an schwer zugänglichen und räumlich beengten Stellen nicht oder nur mit großem Aufwand einsetzbar ist. Hinzukommt, daß z. B. bei der Montage von Verbindungsstellen der Schutzschlauch zunächst über das eine der zu verbindenden Enden geschoben werden muß und nach dem Durchverbinden der Enden, die elektrische Leitungen oder auch Rohre und dergl. sein können, über die Verbindungsstelle zurückzuschieben ist. Hierbei kommt es oft darauf an, daß der Schutzschlauch auch umstülpbar sein muß, z. B. dann, wenn die Verbindungsstelle auf einen engen Raum beschränkt ist, so daß der Schutzschlauch nicht weit genug über das eine oder andere Ende zurückgeschoben werden kann.

Der Erfindung liegt daher die Aufgabe zugrunde, einen Schutzschlauch so auszubilden, daß er die notwendige Flexibilität aufweist, umstülpbar ist, aber auch den geforderten mechanischen Beanspruchungen genügt.

Gelöst wird diese Aufgabe gemäß der Erfindung dadurch, daß der Schutzschlauch ein Strickschlauch aus hochzugfesten Fäden oder Strängen ist. Ein solcher Strickschlauch ist in beliebigen Längen herstellbar, auch sind die unterschiedlichsten Durchmesser in Anpassung an die jeweiligen Gegebenheiten möglich. Der erfindungsgemäße Schutzschlauch trägt nicht auf, er läßt sich umstülpen, so daß insbesondere an Verbindungsstellen elektrischer Leitungen oder Rohre eine leichte Montage möglich ist. Vorteilhaft für einen solchen als Strickschlauch ausgebildeten Schutzschlauch ist ferner, daß im Gegensatz zu einem geflochtenen oder gewebten Schlauch bekannter Ausführungen die Dehnung in axialer Richtung praktisch vernachlässigbar ist, während in radialer Richtung hohe Dehnungswerte erreicht werden können. Diese Eigenschaft ist von besonderem Interesse bei der Herstellung von Verbindungsstellen, die mit einem Schutzschlauch überdeckt werden müssen, sowie bei der Konfektionierung von elektrischen Leitungen, von Steuerröhrchen und dergl., wo der Schutzschlauch auf eine vorbestimmte Länge abgeschnitten werden muß. Während bei gewebten oder geflochtenen Schutzschläuchen mit einem relativ hohen Dehnungsvermögen in Achsrichtung es praktisch nicht möglich ist, reproduzierbar gleiche Längen herzustellen, gibt es diese Schwierigkeiten bei dem erfindungsgemäßen Schutzschlauch mit in Achsrichtung vernachlässigbarer Längendehnung nicht.

Der Schutzschlauch nach der Erfindung ist aber auch zurückschiebbar, wenn es um die Freilegung eines Leitungs- oder Rohrabschnittes geht, anschließend federt er problemlos in die ursprüngliche gestreckte Form wieder zurück. Dieses Rückstellungsvermögen zeigt der erfindungsgemäße Strickschlauch selbstverständlich auch in radialer Richtung, d. h., z. B. nach dem Umstülpen des Endes nimmt der Schlauch seinen ursprünglichen Durchmesser wieder ein.

In Durchführung der Erfindung ist der Strickschlauch aus einem Einzelfaden- oder strang aufgebaut, dies sichert neben einer einfachen Herstellung die hohe mechanische Festigkeit des Schutzschlauches, ohne daß zusätzliche Hüllen oder Schichten, wie beim oben genannten Stand der Technik, erforderlich wären.

In Weiterführung des Erfindungsgedankens hat es sich als vorteilhaft erwiesen, die Rückstellkräfte des erfindungsgemäßen Schutzschlauches dadurch zu erhöhen, daß der Strickschlauch mit einem gummielastischen Werkstoff beschichtet ist. Die gewünschte fehlende Dehnung in Achsrichtung wird hierdurch nicht verändert, die Rückstellkräfte nach dem Ausdehnen des Schutzschlauches in radialer Richtung werden jedoch wesentlich erhöht. Nach dem Fortlassen der radial wirkenden Zugkräfte kommt es zu einem augenblicklichen Rückschnappeffekt des erfindungsgemäßen Strickschlauches. Dies verbessert die Montagefähigkeit des Schutzschlauches weiter. Der Rückschnappeffekt führt aber darüberhinaus noch zu einem dichten Aufliegen des Strickschlauches auf dem zu schützenden Gut nach Durchführung der Montage.

Wird eine besonders hohe Flexibilität des Schutzschlauches verlangt, dann kann es oft vorteilhaft sein, mit der Beschichtung durch den gummielastischen Werkstoff nicht die gesamte Oberfläche des Schutzschlauches zu bedecken, sondern das Fertigungsverfahren so durchführen zu lassen, daß die Beschichtung aus dem Strickmuster des Schlauches folgende Ringe oder Wendeln besteht. Dies hat neben der gewünschten, nach wie vor gegebenen hohen Rückstellkraft in radialer Richtung den Vorteil, daß die Porosität des Schlauches gegenüber einem gänzlich unbeschichteten Schlauch gewährleistet bleibt.

Unabhängig davon, ob die Beschichtung des Strickschlauches flächenhaft über die gesamte Oberfläche des Schutzschlauches sich erstreckt oder nur in Ringen oder Wendeln dem Strickmuster folgt, durchdringt nach einem weiteren Erfindungsgedanken das gummielastische Material das Gestrick. Dies führt zu einer sicheren Verankerung des Beschichtungsmaterials. Eine Trennung der Beschichtung vom Gestrick ist verhindert, diese Art "Tränkung" des Gestrickes sichert nach wie vor einen einfachen, montagefreundlichen Aufbau.

Folgt, wie ausgeführt, die Beschichtung des Strickmusters in Ringen oder Wendeln, dann ist es besonders zweckmäßig, wenn der gummielastische Werkstoff die Maschen des Gestrickes noppenartig ausfüllt. Dies ist eine sichere Verankerung des Ringes oder der Wendel aus dem elastischen Werkstoff, die für die hohen Rückstellkräfte und die sichere Verankerung des gummielastischen Werkstoffes im Gestrick selbst Gewähr bietet.

Der Ring oder die Wendel aus dem im Gestrick vorgesehenen gummielastischen Werkstoff kann z. B. auch ein Faden sein, der während des Fertigungsprozesses in das Gestrick eingeführt wird. Man kann aber auch so vorgehen, daß zusammen mit dem Einzelfaden aus hochzugfestem Werkstoff ein Faden oder Strang aus einem gummielastischen Material verstrickt wird bzw. der hochzugfeste Faden oder Strang von einem gummielastischen Material umhüllt ist.

Das gummielastische Material, also ein vernetzter Natur- oder Kunstkautschuk wird vorteilhaft ein Silikonkautschuk sein, da hiermit gleichzeitig eine erhöhte Temperaturbeständigkeit des elastischen Materials gewährleistet ist. Dieser Silikonkautschuk kann auch elektrisch leitfähig ausgebildet sein, so daß der Schutzschlauch neben seiner mechanischen Schutzfunktion gleichzeitg Abschirmwirkung übernehmen kann.

Die Fäden oder Stränge aus dem hochzugfesten Material bestehen vorteilhaft aus Kunststoffen auf der Basis Polyamid oder Polyaramid, wie sie unter dem Handelsnamen KEVLAR bekannt sind. Aber auch andere hochzugfeste Fäden oder Stränge, etwa auf der Basis von Glas oder Kohle, sind für die Zwecke der Erfindung geeignet, wenn nur die Gewähr gegeben ist, daß bei der erfindungsgemäßen Verarbeitung dieser Materialien zu einem Strickschlauch die Dehnung in Achsrichtung des gestrickten Schutzschlauches praktisch 0 %, die Ausdehnungsmöglichkeit in radialer Richtung jedoch 100 % und mehr betragen kann.

Besondere Vorteile gegenüber auch anderen bekannten hochzugfesten Werkstoffen zeigen die bereits genannten Polyamide und Polyaramide für den Einsatz im erfindungsgemäßen Strickschlauch dadurch, daß sie gleichzeitig hochtemperaturbeständig sind, gegenüber mechanischen Beanspruchungen aber auch eine hohe Scheuerunempfindlichkeit und hohe Abriebfestigkeit aufweisen. Damit sind die so ausgebildeten Strickschläuche überall dort vorteilhaft einsetzbar, wo das langgestreckte Gut, z. B. elektrische Leitungen, vor hohen Temperaturen und hohen mechanischen Beanspruchungen geschützt werden muß. Das kann beispielsweise im Maschinenbau der Fall sein, oder überall dort, wo z. B. Steuerleitungen durch trennende Wände hindurchgeführt werden müssen und von den Seiten her etwa regelmäßige oder unregelmäßige Bewegungen auf die Leitung ausgeübt werden.

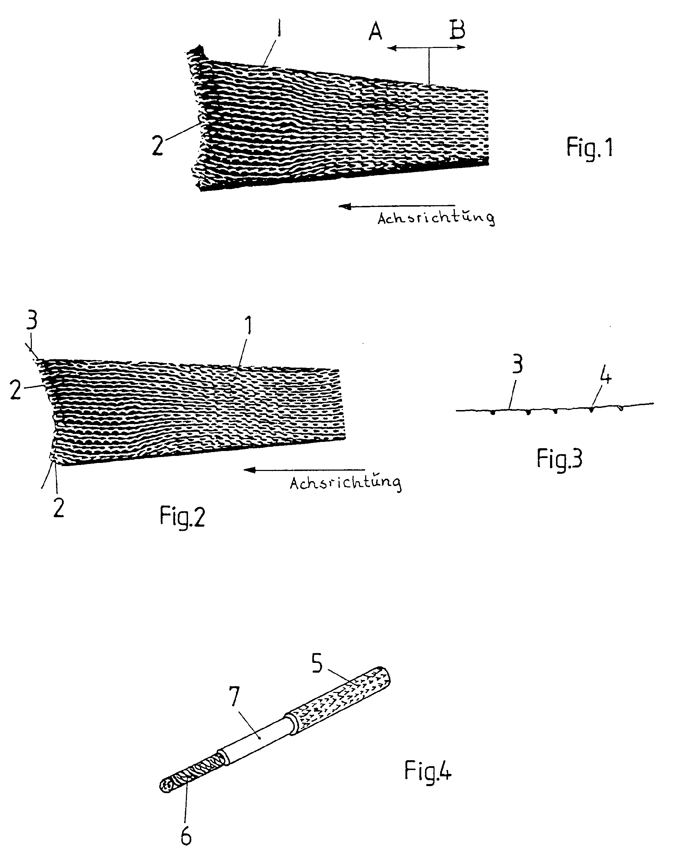

Die Erfindung sei anhand der in den Figuren 1 bis 6 dargestellten Ausführungsbeispiele näher erläutert.

In der Fig. 1 ist mit 1 das Gestrick bezeichnet, aus dem der erfindungsgemäße Schutzschlauch hergestellt ist. Die dargestellte Anordnung ergibt sich dadurch, daß ein durch Stricken aus den hochzugfesten Fäden hergestellter Schlauch aufgeschnitten worden ist. Das Gestrick wurde anschließend im Bereich A in Querrichtung gedehnt, der Bereich B blieb unverändert. Ein solches Gestrick 1, hergestellt beispielsweise aus einem Einzelfaden oder Einzelstrang aus Polyaramid, ist in Strickrichtung, d. h. in Achsrichtung des Schlauches praktisch nicht dehnbar, während es in Richtung quer zur Schlauchachse hohe Dehnungswerte erreicht. Die Maschen des Gestrickes sind mit 2 bezeichnet, durch sie läuft, wie insbesondere aus der Fig. 2 ersichtlich, ein Strang 3 aus einem gummielastischen Material, beispielsweise aus Silikonkautschuk. Dieser Strang 3 weist, wie die Fig. 3 selbst verdeutlicht, Noppen 4 auf, die zur Verankerung des gummielastischen Werkstoffes in die Maschen 2 eingreifen. Erreicht wird dies z. B. dadurch, daß dem Strickmuster des Gestrickes 1 folgend im Fertigungsprozeß der Silikonkautschuk in Ringen oder Wendeln auf das Gestrick aufgebracht wird.

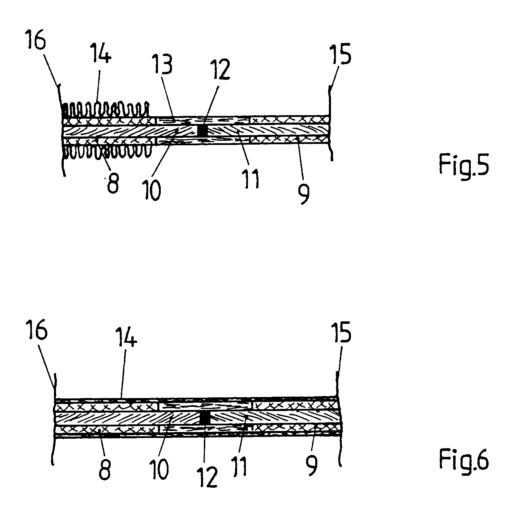

Die Fig. 4 zeigt die Anwendung des erfindungsgemäßen Gestrickes in Form eines Schutzschlauches 5, der eine aus einem elektrischen Leiter 6 und einer beispielsweise temperaturbeständigen Isolierung 7 bestehende elektrische Leitung umschließt. Bei der Herstellung des Schutzschlauches 5 kann der Durchmesser dem zu schützenden langgestreckten Gut angepaßt, d. h. so bestimmt werden, daß der Schutzschlauch nach der Montage das zu schützende Gut dicht umschließt. Man kann aber auch, wenn eine zusätzliche Bewegung der elektrischen Leitung innerhalb des Schutzschlauches gefordert wird, so vorgehen, daß auch der Durchmesser des montierten Schutzschlauches größer als der der zu schützenden elektrischen Leitung ist. Damit ist eine freie Beweglichkeit der elektrischen Leitung innerhalb des Schutzschlauches gewährleistet. Besteht diese Forderung, kann man den Schutzschlauch auch so herstellen, beispielsweise auch durch Umstülpen des gesamten Schlauches nach der Herstellung oder nach Umstülpen des für einen bestimmten Verwendungszweck vorgesehenen Schlauchabschnittes, daß der gummielastische Werkstoff, der auf der Oberfläche des Gestrickes dem Strickmuster folgende leichte Erhebungen bildet, die Gleitfähigkeit des im Innern des Schutzschlauches geführten Gutes weiter erhöht.

Die Fig. 5 und 6 zeigen eine weitere vorteilhafte Verwendungsmöglichkeit des gemäß der Erfindung ausgebildeten Schutzschlauches. Mit 8 und 9 sind die beiden Enden zweier elektrischer Leitungen bezeichnet, deren Leiter 10 und 11 an der Verbindungsstelle 12 durchverbunden sind. Auf diese Verbindungsstelle ist in bekannter Weise die Isolierung 13 aufgebracht, die z. B. aus einem Wickelband besteht. Um diese Verbindungsstelle gegen äußere mechanische Einflüsse, aber auch gegen Temperatureinwirkung zu schützen, ist der Schutzschlauch 14 vorgesehen, der entsprechend der Erfindung aus einem Gestrick besteht, wie es in den Fig. 1 bis 3 dargestellt ist. Da in dem dargestellten Ausführungsbeispiel die Schutzschlauchlänge auf die Länge zwischen den Bereichen 15 und 16 beschränkt ist, kommt es darauf an, den Schutzschlauch so weit abzulängen, das er die Länge der Verbindungsstelle einschließlich der angrenzenden Enden über die gesamte Länge umschließt. Mit Schutzschläuchen bekannter Art gibt es hierbei Schwierigkeiten, da diese in Längsrichtung dehnbar sind und beim Ablängen z. B. und den hierbei notwendigen Zugkräften vorgegebene Längen nicht eingehalten werden können. Immer wieder kommt es vor, daß abgelängte Schutzschläuche bekannter Art entweder zu kurz oder zu lang bemessen sind, wenn sie nach dem Durchverbinden zweier Leitungen zurückgeschoben werden müssen.

Abhilfe schafft hier die Erfindung mit dem den Schutzschlauch bildenden Gestrick, da aufgrund der nicht vorhandenen bzw. vernachlässigbaren Längenausdehnung lediglich ein der tatsächlichen Entfernung zwischen den Stellen 15 und 16 entsprechender Längenabschnitt des Schutzschlauches abgelängt und dann, wie die Fig. 5 erkennen läßt, über das eine Ende der zu verbindenden Leitungen gestülpt wird. Die Ausdehnung dieses Schutzschlauches in radialer Richtung läßt ein leichtes wellenförmiges Aufkorben zu, nach dem Durchverbinden der Leiter 10 und 11 und dem Zurückschieben des Schutzschlauches 14 über die zwischen den Stellen 15 und 16 befindliche Leiterverbindung ist die gesamte Strecke vollständig von dem Schutzschlauch umhüllt. Dem Gestrick zufolge und dem Einsatz der in den Ausführungsbeispielen verwendeten Polyaramidfasern erfolgt die Rückführung des entsprechend der Fig. 5 aufgekorbten Schutzschlauches in die gestreckte Form entsprechend Fig. 6 weitgehend selbsttätig.

Die Beschichtung des Schutzschlauches kann, wie bereits ausgeführt, die gesamte Oberfläche bedecken, sie kann aber auch auf dieser in Form von Ringen oder Wendeln aufgebracht sein. Die erwähnte Bedeckung der gesamten Oberfläche beinhaltet eine Beschichtung als in sich geschlossene Schicht mit in die Maschen eingreifendes Beschichtungsmaterial ebenso wie eine Beschichtung, die zwar das Gestrick oberflächlich vollständig erfaßt, dabei aber der Oberflächenstruktur folgt, also nicht mit in die Strickmaschen eingreift. Auf diese Weise ist erreicht, daß jeder Strickfaden oder -strang lediglich an der die Oberfläche des Strickschlauches mitbildenden Teilfläche beschichtet ist. Dies führt zu einem besonders ansprechenden Aussehen des erfindungsgemäßen Strickschlauches, aber auch zu einer besonders montagefreundlichen Ausführungsform der Erfindung mit leichter Umstülpbarkeit und Aufschiebbarkeit in Achsrichtung sowie leichter Dehnbarkeit in radialer Richtung. Die Rückstellfähigkeit des Strickschlauches nach einer Dehnungsbeanspruchung ist nach wie vor gegeben.

Der erfindungsgemäße Strickschlauch ist, wie ausgeführt, beliebig einsetzbar. Es kann deshalb vorkommen, daß langgestrecktes Gut aus einem Material geschützt werden muß, das gegenüber Silikonkautschuk beispielsweise nicht die gewünschte Gleitfähigkeit aufweist. Hier schafft auch Abhilfe die oben dargestellte Ausführungsform der Erfindung mit der nur oberflächlichen Beschichtung ohne Durchdringung des Beschichtungsmaterials. In diesem Fall wird die Gleitfähigkeit des Strickschlauches auf dem Gut lediglich durch das Material des Gestrickes bestimmt.

## Patentansprüche

1. Flexibler Schutzschlauch für langgestrecktes Gut, wie elektrische Leitungen, Rohrleitungen, Rohrbündel und dergl., aus isolierenden Fäden oder Strängen, dadurch gekennzeichnet, daß der Schutzschlauch ein Strickschlauch aus hochzugfesten Fäden oder Strängen ist.

2. Schutzschlauch nach Anspruch 1, dadurch gekennzeichnet, daß der Strickschlauch aus einem Einzelfaden- oder strang aufgebaut ist.

3. Schutzschlauch nach Anspruch 1 oder 2, dadurch gekennzeichnet, daß der Strickschlauch mit einem gummielastischen Werkstoff beschichtet ist.

4. Schutzschlauch nach Anspruch 3, dadurch gekennzeichnet, daß die Beschichtung aus dem Strickmuster folgende Ringe oder Wendeln aus dem gummielastischen Werkstoff besteht.

5. Schutzschlauch nach Anspruch 3 oder 4, dadurch gekennzeichnet, daß der gummielastische Werkstoff das Gestrick durchdringt.

6. Schutzschlauch nach Anspruch 5, dadurch gekennzeichnet, daß der gummielastische Werkstoff die Maschen des Gestrickes noppenartig ausfüllt.

7. Schutzschlauch nach Anspruch 1 oder 2, dadurch gekennzeichnet, daß das Gestrick in Achsrichtung wendelförmig verlaufende Fäden aus gummielastischem Material enthält.

8. Schutzschlauch nach Anspruch 1 oder einem der folgenden, dadurch gekennzeichnet, daß zusammen mit dem Einzelfaden aus hochzugfestem Werkstoff ein Faden oder Strang aus einem gummielastischen Material verstrickt ist.

9. Schutzschlauch nach Anspruch 1 oder einem der folgenden, dadurch gekennzeichnet, daß der oder die hochzugfesten Fäden oder Stränge mit einem gummielastischen Material umhüllt sind.

10. Schutzschlauch nach Anspruch 1 oder einem der folgenden, dadurch gekennzeichnet, daß das gummielastische Material ein Silikonkautschuk ist.

11. Schutzschlauch nach Anspruch 10, dadurch gekennzeichnet, daß der Silikonkautschuk elektrisch leitfähig ist.

12. Schutzschlauch nach Anspruch 1 oder einem der folgenden, dadurch gekennzeichnet, daß die Fäden oder Stränge aus hochzugfesten Kunststoffen auf Basis Polyamid oder Polyaramid bestehen.

13. Schutzschlauch nach Anspruch 1 oder einem der folgenden, dadurch gekennzeichnet, daß die hochzugfesten Fäden oder Stränge aus Materialien wie Glas oder Kohle bestehen.

14. Schutzschlauch nach Anspruch 3 oder einem der folgenden, dadurch gekennzeichnet, daß die Beschichtung mit dem gummielastischen Werkstoff aus einem dünnen Materialauftrag besteht, der lediglich die außenliegenden Teilflächen des Strickfadens oder -stranges benetzt.

## Claims

1. Flexible protective tube for elongated material, such as electrical cables, pipelines, bundles of pipes and the like, made of insulating threads or cords, characterised in that the protective tube is a knitted tube made of threads or cords with a high tensile strength.

2. Protective tube according to claim 1, characterised in that the knitted tube is made of a single thread or cord.

3. Protective tube according to claim 1 or 2, characterised in that the knitted tube is covered with a rubber elastic material.

4. Protective tube according to claim 3, characterised in that the covering is made of rings or coils of the rubber elastic material following the knitted pattern.

5. Protective tube according to claim 3 or 4, characterised in that the rubber elastic material penetrates the knitting.

6. Protective tube according to claim 5, characterised in that the rubber elastic material fills the loops of the knitting in the manner of knubs.

7. Protective tube according to claim 1 or 2, characterised in that the knitting comprises threads of rubber elastic material running helically in the axial direction.

8. Protective tube according to claim 1 or one of the following claims, characterised in that a thread or cord of a rubber elastic material is knitted with the individual thread of material with a high tensile strength.

9. Protective tube according to claim 1 or one of the following claims, characterised in that the thread(s) or cord(s) with a high tensile strength are surrounded with a rubber elastic material.

10. Protective tube according to claim 1 or one of the following claims, characterised in that the rubber elastic material is a silicone rubber.

11. Protective tube according to claim 10, characterised in that the silicone rubber is electrically conductive.

12. Protective tube according to claim 1 or one of the following claims, characterised in that the threads or cords are made of plastics with a high tensile strength based on polyamide or polyaramide.

13. Protective tube according to claim 1 or one of the following claims, characterised in that the threads or cords with the high tensile strength consist of materials such as glass or carbon.

14. Protective tube according to claim 3 or one of the following claims, characterised in that the covering with the rubber elastic material consists of a thin application of material which only wets the external part surfaces of the knitted thread or cord.

## Revendications

1. Tube protecteur pour produit allongé comme des conducteurs électriques, tuyauteries, faisceaux tubulaires et analogues, en fils ou filaments isolants, caractérisé en ce que le tube protecteur est un tube tressé en fils ou cordons très résistants à la traction.

2. Tube protecteur selon la revendication 1, caractérisé en ce que le tube tressé est réalisé en mono-fils ou cordon séparé.

3. Tube protecteur selon la revendication 1 ou 2, caractérisé en ce que le tube tressé est revêtu d'un matériau élastique comme du caoutchouc.

4. Tube protecteur selon la revendication 3, caractérisé en ce que le revêtement des anneaux ou spires, suivant la partie tressée, est en matériau élastique en caoutchouc.

5. Tube protecteur selon la revendication 3 ou 4, caractérisé en ce que le matériau élastique, en caoutchouc.

6. Tube protecteur selon la revendication 5, caractérisé en ce que le matériau élastique en caoutchouc remplit les mailles de la tresse en forme de nappe.

7. Tube protecteur selon la revendication 1 ou 2, caractérisé en ce que la tresse comprend des fils en matériau élastique en caoutchouc qui s'enroulent en spirale dans le sens axial.

8. Tube protecteur selon la revendication 1 ou l'une des revendications suivantes, caractérisé en ce qu'on tresse avec le fil séparé en matériau très résistant, un fil ou un cordon en matériau élastique en caoutchouc.

9. Tube protecteur selon la revendication 1 ou l'une des revendications suivantes, caractérisé en ce que le ou les fils, ou cordons très résistants sont enrobés d'un matériau élastique en caoutchouc.

10. Tube protecteur selon la revendication 1 ou l'une des revendications suivantes, caractérisé en ce que le matériau élastique en caoutchouc est un caoutchouc au silicone.

11. Tube protecteur selon la revendication 10, caractérisé en ce que le caoutchouc au silicone est électriquement conducteur.

12. Tube protecteur selon la revendication 1 ou l'une des revendications suivantes, caractérisé en ce que les fils ou cordons sont en matières plastiques très résistantes à la traction à base de polyamide ou de polyaramide.

13. Tube protecteur selon la revendication 1 ou l'une des revendications suivantes, caractérisé en ce que les fils ou cordons très résistants à la traction sont en matériaux tels que du verre ou du carbone.

14. Tube protecteur selon la revendication 3 ou l'une des revendications suivantes, caractérisé en ce que le revêtement est constitué d'un matériau élastique en caoutchouc, réalisé en dépôt mince qui ne mouille que les surfaces externes partielles du fil ou du cordon tressé.
